# EUROPÄISCHE PATENTANMELDUNG

(11) **EP 1 457 903 A1**
(43) Veröffentlichungstag der Anmeldung: **15.09.2004**
(21) Anmeldenummer: 03100656.2
(22) Anmeldetag: 14.03.2003
(51) Int. Cl.: G06F 17/60

(54) **Verfahren zur Dokumentation des Weges von Bauteilen in einer Logistikkette, und Computerprogramm zur Durchführung des Verfahrens**

(71) Anmelder: ALSTOM Technology Ltd, 5400 Baden (CH)
(72) Erfinder: Ebe, Kurt, 79761, Waldshut-Tiengen (DE); Möller, Uwe, 5611, Schinznach-Bad (CH)

(57) **Zusammenfassung**

Die vorliegende Erfindung beschreibt ein Verfahren zur Dokumentation von Bauteilen in einer Logistikkette, welches Verfahren auf einem System vernetzter Computer basiert, wobei an jedem relevanten Ort der Logistikkette ein lokales Computcrsystcm vorhanden ist, und weiterhin ein zentrales Computersystem vorhanden ist, welches zentrale Computersystem mit den lokalen Computersystemen Daten austauschen kann. Dabei ist jedes Bauteil eindeutig identifizierbar, und an relevanten Orten der Logistikkette werden bauteilrelevante Daten in einem standardisierten Formular, welches jeweils für jedes individuelle Bauteil existiert, vermerkt, wobei das Formular über Datenfernübertragungsleitungen an das zentrale Computersystem übermittelt wird und wobei jeweils das aktualisierte Formular als standardisierter Datensatz in einer Datenbank oder in einem Datenbanksystem des zentralen Computersystems gespeichert wird. Bei einem derartigen Verfahren werden die in Bezug auf den Transport und/oder den Wert des Bauteils relevanten Daten in möglichst Speicherplatz sparender und jederzeit schnell einsehbarer Weise zur Verfügung gestellt, indem im Formular Daten über in Bezug auf die Logistikkette kumulative Eigenschaften des Bauteils festgehalten werden.

## Beschreibung

### TECHNISCHES GEBIET

Die vorliegende Erfindung betrifft ein Verfahren zur Dokumentation des Weges von Bauteilen, insbesondere zur Dokumentation des Transportweges von Bauteilen. Sie betrifft ausserdem ein Computerprogramm zur Durchführung eines derartigen Verfahrens.

### STAND DER TECHNIK

Hochtechnisierte Fertigungsmethoden erfordern hochspezialisierte Fertigungs- und Bearbeitungsbetriebe. Die notwendige Auslastung teuerer Maschinen, und die Konzentration von Spezialwissen bedingen, dass bestimmte Bearbeitungsschritte bei der Herstellung technisch hochentwickelter Komponenten nur von wenigen, auf der ganzen Welt verstreuten Spezialbetrieben durchgeführt werden können. Die Herstellung solcher Komponenten erfordert eine ausgeklügelte Logistikkette. Insbesondere im Zusammenhang mit der heute immer wichtigeren, modularen Bauweise von Produkten, bei welcher gewisse Einzelteile bei einer Vielzahl von verschiedenen Produkten Anwendung finden können, während andere Einzelteile nur bei einzelnen spezifischen Produkten Anwendung finden, werden zunehmend komplexe Datenverarbeitungssysteme eingesetzt, welche Produkte im Laufe des Wertschöpfungsprozesses verfolgen und dokumentieren. So beschreiben z. B. die US 5,864,875, die US 6,014,628, sowie die EP 1168117 und die WO 01/69467 derartige Systeme, welche auch unter den Begriffen product data management Systeme (PDM-Systeme) oder product information management Systeme (PIM-Systeme) bekannt sind.

Die technische und auch logistische Verwertbarkeit der in derartigen Systemen festgehaltenen Daten hängt stark von der spezifischen Auswahl der festgehaltenen Daten ab. Nur eine geschickte und möglichst umfangsmässig beschränkte Wahl von Produktdaten erlaubt eine sinnvolle Verfolgung (Tracking) der Bauteile während des Wertschöpfungsprozesses, ohne dass die Nutzbarkeit der Daten durch deren schiere Menge beeinträchtigt wird.

### DARSTELLUNG DER ERFINDUNG

Der Erfindung liegt demnach die Aufgabe zugrunde, ein Verfahren zur Verfügung zu stellen, bei welchem die insbesondere in Bezug auf den Transport und/oder den Wert des Bauteils relevanten Daten in möglichst Speicherplatz sparender und jederzeit schnell einsehbarer Weise zugänglich sind. Es handelt sich dabei um ein Verfahren zur Dokumentation von Bauteilen in einer Logistikkette, welches Verfahren auf einem System vernetzter Computer basiert, wobei an jedem relevanten Ort der Logistikkette ein lokales Computersystem vorhanden ist, und weiterhin ein zentrales Computersystem vorhanden ist, welches zentrale Computersystem mit den lokalen Computersystemen Daten austauschen kann. Dabei ist jedes Bauteil eindeutig identifizierbar (z. B. über Ident- oder Seriennummer), und es werden an relevanten Orten der Logistikkette (z. B. bei Änderung des Transportmittels, bei der Durchführung eines Bearbeitungsschrittes etc.) bauteilrelevante Daten in einem standardisierten Formular (häufig certificate of origin genannt), welches jeweils für jedes individuelle Bauteil existiert, vermerkt. Das Formular wird dabei über Datenfernübertragungsleitungen an das zentrale Computersystem übermittelt und es wird jeweils das aktualisierte Formular als standardisierter Datensatz in einer Datenbank oder in einem Datenbanksystem des zentralen Computersystems gespeichert. Ein derartiges Verfahren ist beispielsweise in der WO 01/69467 beschrieben.

Die Lösung dieser Aufgabe wird dadurch erreicht, dass im Formular Daten über in Bezug auf die Logistikkette kumulative Eigenschaften des Bauteils festgehalten werden.

Der Kern der Erfindung besteht somit darin, nicht einfach nur, wie nach dem Stand der Technik üblich, jeweils den Istzustand (Ort, Weg, Datum, etc.) respektive einzelne individuelle Verfahrenszustände oder Bearbeitungsschritte respektive Transportschritte festzuhalten, sondern zusätzlich direkt die relevanten kumulativen Eigenschaften zu dokumentieren, d. h. unmittelbar die relevanten Daten durch jeweilige Addition zu bilden. Diese kumulativen Daten, welche häufig die am meisten interessierende Information darstellen, können so unter Verwendung von möglichst wenig Speicherplatz abgelegt werden und sind jederzeit ohne weiteren Rechenaufwand direkt abfragbar. Die Dokumentation der kumulativen Daten führt so zu einer technischen Erleichterung (Reduktion von Speicherplatzerfordernis, Erhöhung der Abfragegeschwindigkeit) und zu einer komfortableren Verfolgung des Bauteils entlang der Logistikkette.

Gemäss einer ersten bevorzugten Ausführungsform der Erfindung handelt es sich bei den kumulativen Daten um den kumulativen Wert des Bauteils. Dieser wird insbesondere bevorzugt gemäss einer prozesskettenspezifischen Preisliste für den jeweiligen Wertschöpfungs- oder Lagerungsschritt bestimmt und aufaddiert. Derartige prozesskettenspezifische Preislisten können in einer zentralen Datenbank gespeichert und verwaltet respektive aufdatiert gehalten werden. So kann innerhalb der Logistikkette jederzeit schnell und verlässlich der momentane Wert des Bauteils ermittelt werden, wobei insbesondere im Zusammenhang mit Lagerungsperioden es z. B. auch möglich ist, das Formular automatisch periodisch aufzudatieren, um der Ausdehnung der Lagerungsperiode jederzeit in Echtzeit Rechnung zu tragen. Das Festhalten des kumulativen Wertes erlaubt so wesentlich schnellere und effizientere Überblicksabfragen des Gesamtwerts von Bauteilen oder von Gruppen von Bauteilen in einer Logistikkette, da im Rahmen von derartigen Abfragen nicht mehr aus der ganzen Geschichte des Bauteils der kumulative Wert und zwar absolut und relativ zum Endwert ausgerechnet werden muss, sondern dieser unmittelbar im Formular zur Verfügung steht.

Eine andere bevorzugte Ausführungsform zeichnet sich dadurch aus, dass es sich zusätzlich oder alternativ bei den kumulativen Daten um in Bezug auf den Transport innerhalb der Logistikkette relevante Daten handelt. Insbesondere im Zusammenhang mit dem Transport und der Evaluation z. B. der Umweltbelastung oder der Kosten des Transports von Bauteilen sind gerade in der heutigen Zeit, wo ökologische Fragen von zunehmender Wichtigkeit sind, derartige kumulative Daten äusserst vorteilhaft. Insbesondere erweist es sich als sinnvoll, das Gewicht des Bauteils festzuhalten, d. h. das jeweils momentane Istgewicht. Dieses Gewicht zeichnet nämlich wesentlich für die insbesondere bei grossen Komponenten relevanten Kosten respektive ökologischen Belastungen verantwortlich. Aus dem Gewicht lässt sich anschliessend eine kumulative Angabe von transportbedingten Umweltbelastungspunkten innerhalb der Logistikkette ermitteln und im Formular festhalten. Diese Umweltbelastungspunkte erlauben eine schnelle und direkte Abfrage gewissermassen der "ökologischen Verträglichkeit" des Transports. Dabei werden bevorzugt die jeweils addierten "Umweltbelastungspunkte" als Produkt der Entfernung des letzten Transportwegabschnittes der Logistikkette multipliziert mit dem aktuellen Gewicht während des letzten Transportwegabschnittes multipliziert mit einem transportmittelabhängigen Faktor definiert. Die Entfernung des letzten Transportwegabschnittes der Logistikkette kann bevorzugt aus der jeweils durch den letzten Transportschritt geänderten Postleitzahl insbesondere unter Zuhilfenahme einer entsprechenden Tabelle ermittelt werden. Auch diese Tabelle kann wiederum zentral auf einer Datenbank gespeichert, verwaltet und aufdatiert gehalten werden, sodass auf eine Speicherung auf den lokalen Computersystemen verzichtet werden kann. Um einen Startpunkt für dieses Verfahren zu definieren, kann ausserdem das Ursprungsland in Form eines Ländercodes nach ISO festgehalten werden.

Aus Kontrollgründen kann es sich als sinnvoll erweisen, beim Einbau des Bauteils den letzten Satz der kumulativen Daten auszugeben, wobei insbesondere bevorzugt das aktuelles Gewicht, das Ursprungsland und/oder die kumulativen Umweltbelastungspunkte ausgegeben werden.

Weitere bevorzugte Ausführungsformen des erfindungsgemässen Verfahrens sind in den abhängigen Ansprüchen beschrieben.

Die vorliegende Erfindung betrifft ausserdem eine Verwendung der in einem Verfahren, wie es oben beschrieben ist, erzeugten kumulativen Daten in einem (Geschäfts-)Bericht, in welchem insbesondere bevorzugt Tonnen pro Jahr, Umweltbelastungspunkte pro Tonnen und Jahr, Wert pro Land und Jahr, und/oder Tonnenkilometer pro Jahr für die Bauteile festgehalten werden. Wiederum können derartige Geschäftsberichte mit wesentlich geringeren technischem Aufwand erzeugt werden, da die kumulativen Daten bereits in den standardisierten Formularen enthalten sind und nicht bei jeder Abfrage neu erzeugt werden müssen.

Die vorliegende Erfindung umfasst zusätzlich ein Datenverarbeitungssystem insbesondere Computerprogrammsystem zur Durchführung eines Verfahrens respektive einer Verwendung, wie sie oben beschrieben wurden.

### WEGE ZUR AUSFÜHRUNG DER ERFINDUNG

Die effiziente Abwicklung von Projekten, die Steuerung einer Logistikkette, nicht zuletzt aber auch die Sicherung der Qualität, erfordern, dass der Prozesseigner jederzeit über den Ort und den Prozessschritt, an oder in dem ein individuelles Bauteil sich befindet, informiert sein muss. Ein Prozesseigner muss jederzeit Informationen über den Ort eines Bauteils innerhalb der Logistikkette erhalten. Ein Verfahren, welches dieses Erfordernis erfüllt ist in der WO 01/69467 beschrieben. Der Offenbarungsgehalt dieser Schrift sei hiermit explizit in diese Anmeldung eingeschlossen. Dabei kann ein Verfahren zur Darstellung und Verarbeitung von Prozessabläufen Anwendung finden, wie es in der EP 1 168 117 beschrieben ist. Auch der Offenbarungsgehalt dieser Schrift sei explizit in diese Anmeldung eingeschlossen.

Die in diesen beiden Schriften vorgestellten Verfahren erfordern möglichst wenige externe Eingriffe, und schliessen so Fehlerquellen und Manipulationsmöglichkeiten aus, die Informationen sind aber gleichzeitig von einer Mehrzahl von Prozesseignern und/oder anderen Prozessen abrufbar. Ein Prozesseigner, der sich an einem beliebigen physischen Ort befindet, kann in Echtzeit Informationen über den physischen Aufenthaltsort eines Bauteils sowie dessen logischen Aufenthaltsort in der Logistikkette abrufen und Entscheidungen über den weiteren Weg des Bauteils treffen. Alle diese Schritte müssen dokumentiert werden, denn die Qualitätskontrolle erfordert u.a. eine lückenlose Dokumentation jedes Schrittes des Bauteils in der Logistikkette.

Die ganzheitliche Betrachtungsweise von Prozessen und Projekten erfordert es, Veränderungen der Eigenschaften des Bauteils im weitesten Sinne zu erfassen und zu dokumentieren. Zu diesen Eigenschaften zählen die Wertschöpfung an verschiedenen Orten der Logistikkette, die Festlegung des momentanen Aufenthaltsortes des Bauteils, die Dokumentation des Weges des Bauteils aber auch Ausschussquoten und eventuelle Schäden und vieles mehr.

Hierzu wird ein Computerprogrammsystem aufgesetzt, das auf verteilten und vernetzten Ressourcen basiert, und das in einer zentralen Datenbank oder in einem zentral verwalteten System von Datenbanken Informationen über eine Vielzahl von Bauteilen enthält. Bevorzugt wird dabei ein Datensatz pro individuellem Bauteil abgelegt.

Der Datensatz, der zu einem Bauteil gehört, ist in einem standardisierten Formular abgelegt. Den Benutzern (beispielsweise Lieferanten und Prozesseignern) werden alle Daten auf ebenfalls standardisierten Formularen und/oder Buchungsbelegen angezeigt, welche die für den jeweiligen Benutzer relevanten Daten enthalten. Auf diesen Formularen werden die Benutzer gegebenenfalls auch zu Eingaben aufgefordert. Dabei steht eine Anzahl von Formularen zur Verfügung, die auf spezifische Aspekte der Logistikkette fokussieren.

Alle Bauteile, gekennzeichnet durch ihre Identnummer (Zeichnungsnummer), werden vom ersten Produktionsschritt an durch eine individuelle eindeutige und einmalige Seriennummer gekennzeichnet. Die Seriennummern selbst werden bevorzugt in einer zentralen Datenbank verwaltet. Zu einer Seriennummer wird ein zentraler Datensatz abgelegt. Dieser enthält wichtige Bauteileigenschaften, wie den Aufenthaltsort des Bauteils, und zwar sowohl den physischen Aufenthaltsort als auch den logischen Aufenthaltsort innerhalb der Logistikkette. Letzterer definiert auch die bereits durchlaufenen Prozessschritte. Ferner wird (oder kann) dieser Datensatz Angaben über Ursprung und Bestimmung des Bauteils enthalten. Zur Festlegung des Ursprungs kann dabei das Ursprungsland in einem spezifischen Feld des Formulars im ISO-Code festgelegt werden. Dieser ISO-Code kann aus einer Tabelle, die in einer zentral verwalteten Datenbank gehalten wird, ausgelesen werden. Weitere wichtige Eigenschaften sind eventuelle Abweichungen von der Spezifikation (Non-Conformance NC), Durchlaufzeiten, und dergleichen mehr. Aber auch weitere Informationen wie technische Spezifikationen werden dort mit Vorteil gespeichert. Analysen können mit Hilfe anderer Analysewerkzeuge durchgeführt werden, mit denen das System natürlich zu kommunizieren in der Lage sein muss.

Zwischen den zahlreichen Daten, welche die Datensätze enthalten können - besonders zu erwähnen seien an dieser Stelle nochmals die Seriennummer, Spezifikations-Abweichungsnummem (Non-Conformance-Nummern), die Warenbestellungs-Nummer, die Nummer der technischen Spezifikation, die Lieferantenidentifikation, Ausschusslisten., Komponentenpreise, Datum, und dergleichen - kann das Programmsystem logische Verbindungen herstellen.

Neben den genannten Daten, werden nun erfindungsgemäss ausserdem kumulative Daten im standardisierten Formular festgehalten. Zu diesen kumulativen Daten gehören:
- der kumulative Wert des Produkts. Es handelt sich dabei um die Summe der Preise der Wertschöpfungs- oder Lagerungsschritte, welche vom Bauteil bereits durchlaufen wurden. Die Preise der individuellen Schritte können dabei aus einer prozesskettenspezifischen Preisliste, welche auf einem zentralen Server gehalten wird, ausgelesen werden. Die zentrale Speicherung dieser Preisliste erlaubt eine einfache und Platz sparende Verwaltung sowie insbesondere eine zentrale Aufdatierung, welche sicherstellt, dass auch tatsächlich die aktuellen Preise verwendet werden. Bei Lagerungsschritten ist es möglich, in den Preislisten einen Preis pro Lagerungszeit festzulegen, und entsprechend durch automatische periodische Aufdatierung der standardisierten Formulare, den tatsächlichen Preis des Lagerungsschrittes up-to-date zu halten.
- das jeweilige Gewicht des Produkts
- die kumulative Angabe der Umweltbelastungspunkte (UBP, abhängig vom Transportmittel). Die Umweltbelastungspunkte werden jeweils nach einem Transportschritt ermittelt und zum kumulativen Wert aufaddiert. Die Umweltbelastungspunkte ermitteln sich dabei als ein Produkt aus Transportentfernung, Transportgewicht und transportmittelabhängigem Faktor. Die Transportentfernung ist dabei die Entfernung, welche beim letzten Transportschritt innerhalb der Logistikkette zurückgelegt wurde. Diese Tarifentfernung in Kilometern kann einfach aus der jeweils geänderten Postleitzahl ermittelt werden, wobei die entsprechenden Entfernungen in einer zweidimensionalen Matrix festgehalten und direkt auslesbar sein können. Eine derartige Matrix (Tabelle) kann entweder bei den Spediteuren oder zentral gepflegt und gehalten werden. Das Transportgewicht ist das letzte genannte Gewicht des Produkts. Der transportmittelabhängige Faktor, welcher z. B. wesentlich unterschiedlich ist für einen Transport mit dem Lastwagen (Faktor gross) oder mit der Bahn (Faktor klein), kann aus einer zentral gehaltenen Tabelle ausgelesen werden. Die Ermittlung dieser Faktoren kann z. B. auf der Kohlendioxidbelastung, aus dem Verbrauch an nicht emeuerbarem Brennstoff, etc. beruhen.

Informationen über erfolgte Prozessschritte innerhalb der Logistikkette werden jeweils lokal in einen Computer eingegeben und daraus u.a. direkt die kumulativen Werte ausgerechnet und ins standardisierte Formular eingetragen. An wichtigen Stellen innerhalb der Logistikkette ist jeweils ein Computer positioniert. Diese Computer bilden ein vernetztes System verteilter Ressourcen. Insbesondere kommunizieren Sie mit einem zentralen Computer, der die zentrale Datenbank oder das zentrale System von Datenbanken speichert und verwaltet. Die Kommunikation der global verteilten Ressourcen erfolgt dabei in einem WAN über Datenfernübertragungsleitungen, wobei insbesondere an Telefonleitungen oder das Internet zu denken wäre. An einem Standort können Computer durchaus auch über ein LAN miteinander kommunizieren. In dem zentralen Computer wird bevorzugt pro Seriennummer, also pro einzelnem Bauteil, ein Datensatz verwaltet.

Ein einem Bauteil zugeordnetes Standardformular kann jeweils von dem zentralen Computersystem an die anderen Orte der Logistikkette übertragen werden. Somit ist dort vorab bekannt, welche Bauteile an diesen Orten in der nächsten Zeit zu erwarten sind. Alle Daten, insbesondere in der zentralen Datenbank, werden bevorzugt in einem standardisierten Format, beispielsweise im Oracle-Datenformat, abgelegt. Hierauf können andere standardisierte Programmsysteme wie SAP, PDM oder das Lotus Notes NCR (Non Conformance Report) System zugreifen. Da jedes individuelle Bauteil mit einem Datensatz erfasst ist, können sehr weitgehende statistische Analysen der Kosten, der Qualität, der Durchlaufzeiten und dergleichen vorgenommen werden. Dabei erlaubt die Erfassung der kumulativen Daten eine wesentliche Vereinfachung und Beschleunigung der statistischen Analysen. Bevorzugt wird das System auf einer üblichen Internet-Benutzerplattform wie MS Internet Explorer, Netscape Navigator, oder Lotus Notes Domino aufgesetzt. Innerhalb eines Standortes ist eine Intranet-Lösung mittels Standard Lotus Notes-Software denkbar. Das Computerprogrammsystem kann über weite Strecken mit angepasster herkömmlicher Software realisiert werden. Alle Hardwarekomponenten zur Realisierung des Computerprogrammsystems können handelsübliche Komponenten sein.

Aus Kontrollgründen erweist es sich als sinnvoll, beim Einbau des Bauteils in die Kundenmaschine den letzten Satz an Werten auszugeben.

Die Aufnahme von kumulativen und/oder aktuellen Daten wie aktuelles Gewicht und kumulative Umweltbelastungspunkte in das standardisierte Formular erlaubt ausserdem eine einfache und schnelle Übernahme dieser Werte in einen Bericht mit Ausgabe spezifischer Werte für z. B. Tonnen pro Jahr, Umweltbelastungspunkte pro Tonne und Jahr, Wert pro Land und Jahr, Tonnenkilometer pro Jahr, etc..

## Patentansprüche

1. Verfahren zur Dokumentation von Bauteilen in einer Logistikkette, welches Verfahren auf einem System vernetzter Computer basiert, wobei an jedem relevanten Ort der Logistikkette ein lokales Computersystem vorhanden ist, und weiterhin ein zentrales Computersystem vorhanden ist, welches zentrale Computersystem mit den lokalen Computersystemen Daten austauschen kann, wobei jedes Bauteil eindeutig identifizierbar ist, wobei an relevanten Orten der Logistikkette bauteilrelevante Daten in einem standardisierten Formular, welches jeweils für jedes individuelle Bauteil existiert, vermerkt werden, wobei das Formular über Datenfernübertragungsleitungen an das zentrale Computersystem übermittelt wird und wobei jeweils das aktualisierte Formular als standardisierter Datensatz in einer Datenbank oder in einem Datenbanksystem des zentralen Computersystems gespeichert wird,
**dadurch gekennzeichnet, dass**
im Formular Daten über in Bezug auf die Logistikkette kumulative und/oder aktuelle Eigenschaften des Bauteils festgehalten werden.

2. Verfahren nach Anspruch 1, **dadurch gekennzeichnet, dass** es sich bei den kumulativen Daten um den kumulativen Wert des Bauteils handelt, welcher insbesondere bevorzugt gemäss einer prozesskettenspezifischen Preisliste für den jeweiligen Wertschöpfungs- oder Lagerungsschritt bestimmt und aufaddiert wird.

3. Verfahren nach einem der vorhergehenden Ansprüche, **dadurch gekennzeichnet, dass** es sich bei den kumulativen Daten um in Bezug auf den Transport innerhalb der Logistikkette relevante Daten handelt.

4. Verfahren nach Anspruch 3, **dadurch gekennzeichnet, dass** es sich bei den aktuellen Daten um das jeweils aktuelle Gewicht des Bauteils handelt.

5. Verfahren nach Anspruch 3, **dadurch gekennzeichnet, dass** es sich bei den kumulativen Daten um eine kumulative Angabe von transportbedingten Umweltbelastungspunkten innerhalb der Logistikkette handelt, wobei bevorzugt die jeweils addierten Umweltbelastungspunkte als Produkt der Entfernung des letzten Transportwegabschnittes der Logistikkette multipliziert mit dem aktuellen Gewicht während des letzten Transportwegabschnittes multipliziert mit einem transportmittelabhängigen Faktor definiert wird.

6. Verfahren nach Anspruch 5, **dadurch gekennzeichnet, dass** die Entfernung des letzten Transportwegabschnittes der Logistikkette aus der jeweils durch den letzten Transportschritt geänderten Postleitzahl insbesondere unter Zuhilfenahme einer entsprechenden Tabelle ermittelt wird.

7. Verfahren nach einem der vorhergehenden Ansprüche, **dadurch gekennzeichnet, dass** das Ursprungsland in Form eines Ländercodes nach ISO festgehalten wird.

8. Verfahren nach einem der vorhergehenden Ansprüche, **dadurch gekennzeichnet, dass** beim Einbau des Bauteils der letzte Satz der kumulativen Daten ausgegeben wird, wobei insbesondere bevorzugt ein aktuelles Gewicht, ein kumulativer Wert, das Ursprungsland und/oder die kumulativen Umweltbelastungspunkte ausgegeben werden.

9. Verwendung der in einem Verfahren gemäss einem der Ansprüche 1 bis 8 erzeugten kumulativen Daten in einem Geschäftsbericht, in welchem insbesondere bevorzugt Tonnen pro Jahr, Umweltbelastungspunkte pro Tonnen und Jahr, Wert pro Land und Jahr, und/oder Tonnenkilometer pro Jahr für die Bauteile festgehalten werden.

10. Datenverarbeitungssystem insbesondere Computerprogrammsystem zur Durchführung des Verfahrens nach einem der Ansprüche 1 bis 8.
